(19) Europäisches Patentamt
European Patent Office
Office européen des brevets

(11) Veröffentlichungsnummer: 0 268 897 A1

(12) # EUROPÄISCHE PATENTANMELDUNG

(21) Anmeldenummer: 87116296.2

(22) Anmeldetag: 05.11.87

(51) Int. Cl.$^4$: **C09B 29/42**, D06P 1/18

Ein Antrag gemäss Regel 88 EPÜ auf Berichtigung eines Fehlers in den Beispielen nr. 66 und 155 der ursprünglich eingereichten beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **15.11.86 DE 3639155**
**24.03.87 DE 3709567**

(43) Veröffentlichungstag der Anmeldung:
**01.06.88 Patentblatt 88/22**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Loeffler, Hermann**
**Haydnstrasse 23**
**D-6720 Speyer(DE)**
Erfinder: **Lamm, Gunther, Dr.**
**Heinrich-Heine-Strasse 7**
**D-6733 Hassloch(DE)**

(54) **Pyridonazofarbstoffe.**

(57) Pyridonazofarbstoffe der Formel

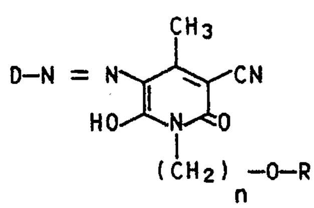

in der D den Rest einer Diazokomponente bedeutet, die sich von der Dichlor-, Trichlor-oder Cyanoanilinreihe oder von Aminobenzoesäure-esterderivaten ableitet, und n und R die in der Beschreibung genannte Bedeutung besitzen.

EP 0 268 897 A1

## Pyridonazofarbstoffe

Die vorliegende Erfindung betrifft neue Pyridonazofarbstoffe, deren Diazokomponeneten sich von der Dichlor-, Trichlor-oder Cyanoanilinreihe oder von Aminobenzoesäureesterderivaten ableiten.

Aus der DE-A-2 951 403 sind Pyridonazofarbstoffe bekannt, die als Diazokomponente Anthranilsäureester aufweisen. Die dort beschriebenen Farbstoffe zeigen jedoch Mängel in ihren anwendungstechnischen Eigenschaften.

Aufgabe der vorliegenden Erfindung war es nun, neue Pyridonazofarbstoffe bereitzustellen, die vorteilhafte färberische Eigneschaften besitzen.

Es wurden Pyridonazofarbstoffe der Formel I

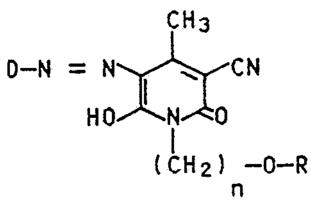 (I),

gefunden, in der

n für die Zahl 2 oder 3,

D für 2,3-Dichlorphenyl, 3,4-Dichlorphenyl, 2,5-Dichlorphenyl, 2,4,5-Trichlorphenyl, 4-Cyanophenyl oder einen Rest der Formel

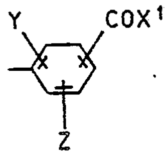

in der $X^1$ $C_1$-$C_4$-Alkyl oder $C_1$-$C_{10}$-Alkoxy, das gegebenenfalls durch ein oder mehrere Sauerstoffatome unterbrochen ist, Y Wasserstoff, Chlor oder den Rest $COX^2$, in dem $X^2$ die Bedeutung von $C_1$-$C_{10}$-Alkoxy, das gegebenenfalls durch ein oder mehrere Sauerstoffatome unterbrochen ist, besitzt und Z Wasserstoff oder Chlor bedeuten und

für einen Rest der Formel

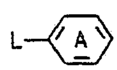, 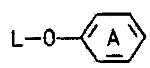,

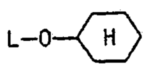, $[L-O]_2-T$, L-OH oder L-O-$COR^1$,

wobei L gegebenenfalls verzweigtes $C_1$-$C_4$-Alkylen, T $C_1$-$C_4$-Alkyl oder

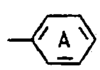

und $R^1$ Wasserstoff oder $C_1$-$C_7$-Alkyl bedeuten und der Ring A jeweils durch Methyl oder Chlor substituiert sein kann, oder für den Fall, daß D den Rest

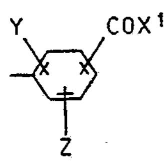

bedeutet, auch für Cyclohexyl stehen, mit der Maßgabe, daß wenn D den Rest

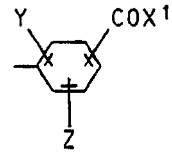

bedeutet und wenn dabei Y und Z gleichzeitig Wasserstoff bedeuten, der Rest $COX^1$ nicht in ortho-Position zur Azobrücke steht.

Alle in den obengenannten Resten auftretenden Alkylgruppen können sowohl geradkettig als auch verzwigt sein.

$X^1$ steht beispielsweise für Methyl, Ethyl, Propyl, Isopropyl, Butyl, Isobutyl oder sec-Butyl.

$X^1$ steht weiterhin, wie auch $X^2$, beispielsweise für Methoxy, Ethoxy, Propoxy, Isopropoxy, Butoxy, Isobutoxy, sec-Butoxy, tert-Butoxy, Pentlyloxy, Isopentyloxy, sec-Pentyloxy, tert-Pentyloxy, Hexyloxy, Heptyloxy, Octyloxy, 2-Ethylhexyloxy, Nonyloxy, Decyloxy, 2-Methoxyethoxy, 2-Ethoxyethoxy, 2-Propoxyethoxy, 2-Butoxyethoxy, 2-oder 3-Methoxypropoxy, 2-oder 3-Ethoxypropoxy, 2-Methoxybutoxy, 4-Ethoxybutoxy, 3,6-Dioxaheptyloxy, 3, 6-Dioxyaoctyloxy, 5,8-Dioxanonyloxy, 3,6-Dioxadecyloxy oder 5,8-Dioxadecyloxy.

L steht beispielsweise für Methylen, Ethyliden, Ethylen, Trimethylen, Isopropyliden Methylethylen, Tetramethylen, 1,2-Dimethylethylen oder 2-Methyltrimethylen.

T steht beispielsweise für Methyl, Ethyl, Propyl, Isopropyl, Butyl, Isobutyl, sec-Butyl, tert-Butyl; Phenyl, 2-Methylphenyl, 3-Methylphenyl, 4-Methylphenyl, 2-Chorphenyl, 3-Chlorphenyl oder 4-Chlorphenyl.

$R^1$ steht beispielsweise für Methyl, Ethyl, Propyl, Isopropyl, Butyl, Isobutyl, sec-Butyl, tert-Butyl, Pentyl, 2-Methylbutyl, Hexyl, 2-Methyl-hexyl oder Heptyl.

R steht beispielsweise für Benzyl, 2-Phenylethyl, 3-Phenylpropyl, 4-Phenylbutyl, 4-Chlorbenzyl, 4-Methylbenzyl, Phenoxymethyl, 2-Phenoxy-ethyl, 3-Phenoxypropyl, 4-Phenoxybutyl, Cyclohexyloxymethyl, 2-Cyclohexyl-oxyethyl, 3-Cyclohexyloxypropyl, 4-Cyclohexyloxybutyl, 2-(2-Methoxy-ethoxy)ethyl, 2-(2-Ethoxyethoxy)ethyl, 2-(2-Butoxyethoxy)ethyl, 2-(2-Phen-oxyethoxy)ethyl, 4-(2-Methoxyethoxy)butyl, 4-(4-Ethoxybutoxy)butyl, 2-Hydroxyethyl, 3-Hydroxypropyl, Formyloxymethyl, Acetyloxymethyl, Propionyloxymethyl, 2-Formyloxyethyl, 2-Acetyloxyethyl, 2-Buturyloxyethyl, 2-Hexanoyloxyethyl, 2-Heptanoyloxyethyl, 2-Octanoyloxyethyl, 2-oder 3-Acetyloxypropyl, 2-oder 3-Isobutyryloxypropyl, 4-Formyloxybutyl, 4-Acetyloxybutyl oder 4-(2-Methylbutyryloxy)butyl.

Bevorzugt sind Pyridonazofarbstoffe der Formel I in der $X^1$ und $X^2$ $C_1$-$C_4$-Alkoxy, das gegebenenfalls durch ein Sauerstoffatom unterbrochen ist, und L unverzweigtes $C_1$-bis $C_4$-Alkylen bedeuten und der Ring A unsubstituiert ist.

Besonders bevorzugt sind Pyridonazofarbstoffe der Formel I, in der
n für die Zahl 3,
D für einen Rest der Formel

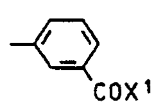 oder 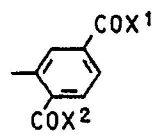 ,

wobei $X^1$ und $X^2$ gleich oder verschieden sind und unabhängig voneinander jeweils $C_1$-$C_4$-Alkoxy, das gegebenenfalls durch ein Sauerstoffatom unterbrochen ist, bedeuten und
für einen Rest der Formel

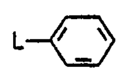 , 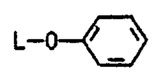 ,

$[(CH_2)_2\text{-}0]_2$-T, $[(CH_2)_3\text{-}0]_2$-T oder L-0-$COR^1$ stehen, wobei L Methylen, Ethylen oder Tetramethylen, T $C_1$-$C_4$-Alkyl oder Phenyl und $R^1$ Methyl oder Ethyl bedeuten.

Insbesondere sind solche Farbstoffe bevorzugt, in denen $X^1$ (und $X^2$) $C_1$-$C_4$-Alkoxy, insbesondere Isobutoxy, 2-Methoxyethoxy, 2-Methoxypropoxy oder 1-Methyl-2-methoxyethoxy, n die Zahl 3 und T 2-Phenoxyethyl bedeuten.

Weiterhin sind Pyridonazofarbstoffe der Formel I besonders bevorzugt, in der
n für die Zahl 3,

D für 2,3-Dichlorphenyl oder 2,5-Dichlorphenyl und
R für einen Rest der Formel

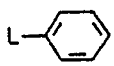 , 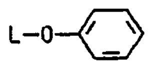 , $[(CH_2)_2-O]_2-T$ , $[(CH_2)_3-O]_2-T$ oder

L-O-COR[1] stehen, wobei L Methylen, Ethylen oder Tetramethylen, T $C_1$-$C_4$-Alkyl oder Phenyl und $R^1$ Methyl oder Ethyl bedeuten.

Zur Herstellung der Pyridonazofarbstoffe der Formel I kann man Diazoniumverbindungen von Aminen der Formel II
$DNH_2$ (II),
in der D die oben genannte Bedeutung besitzt, mit Kupplungskomponenten der Formel III

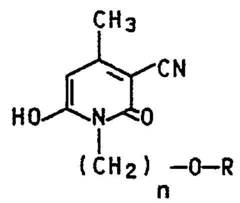 (III),

in der n und R jeweils die oben genannte Bedeutung besitzen , nach an sich bekannten Methoden umsetzen. Einzelheiten der Herstellung können den Beispielen entnommen werden.

Die erfindungsgemäßen Farbstoffe der Formel I färben Polyester in stark grünstichig gelben Nuancen und absorbieren bei einer Wellenlänge von ≦ 427 nm. Die Färbungen zeichnen sich durch sehr gute Gebrauchsechtheiten aus. Die Baderschöpfung bei Färbevorgang ist sehr gut, und gleichzeitig ist die Farbtiefe weitgehend unabhängig von der Färbetemperatur.

Die folgenden Beispiele sollen die Erfindung weiter erläutern. Angaben über Prozente beziehen sich dabei, sofern nicht anders vermerkt, auf das Gewicht.

Beispiel 1

16, 2 g 2,3-Dichloranilin wurden in 40 ml N-Methylpyrrolidon gelöst und durch Austragen auf 200 g Eis, 100 ml Wasser, 30 ml 30 %ige Salzsäure und 3 g eines oxethylierten Oleylamins suspendiert. Dazu tropfte man bei 0 bis 5°C 30 ml einer 3,33 normalen Natriumnitritlösung und rührte eine Stunde bei Überschuß an salpetriger Säure. Dann wurde mit wenig Aminosulfonsäure dieser Überschuß entfernt und die Diazoniumsalzlösung langsam auf ein Gemisch der Kupplungskomponente ausgetragen, das wie folgt bereitet wurde:

30,4 g 1-(3-Benzyloxypropyl)-2-hydroxy-3-cyano-4-methylpyrid-6-on wurden mit 12 g Natriumhydrogencarbonat in 200 ml Wasser bei Raumtemperatur gelöst und filtriert. Das Filtrat wurde mit 300 g Eis gekühlt und mit 30 g Natriumhydrogencarbonat versetzt.

Das Diazoniumsalz war unmittelbar nach der Vereinigung der Komponenten verbraucht. Der gebildete Farbstoff der Formel

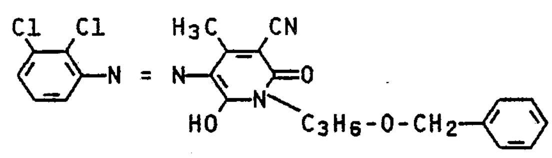

$\lambda$max. = 423 nm
(Aceton)
Fp.: 164 °C

wurde durch Absaugen, Waschen mit Wasser und Trocknung bei 80°C gewonnen. Er färbt Polyester nach dem HT-Verfahren bereits bei 125°C in grünstichig gelben Tönen, wobei das wäßrige Färbeband vollständig ausgezogen wird. Die Färbungen besitzen sehr gute Licht-, Wasch-und Bügelechtheiten.

Beispiel 2

19,65 g 2,4, 5-Trichloranilin wurden mit Wasser und 1,0 g eines oxethylierten Olylamins gemischt und mit 40 ml 30 %iger Salzsäure verrührt. Das Gemisch brachte man sodann mit Wasser auf ein Volumen von 800 ml und eine Temperatur von 10°C und ließ dazu 30 ml einer 3,33 normalen Natriumnitritlösung einfließen. Nach zweistündigem Rühren bei ca. 15°C wurde überschüssige salpetrige Säure mit wenig Aminosulfonsäure zerstört und die Diazoniumsalzlösung filtriert. Dem Filtrat ließ man dann die Lösung von 28,5 g 1-(4-Hydroxy-3-butoxypropyl)-2-hydroxy-3-cyano-4-methylpyrid-6-on in 200 ml Wasser zufließen und rührte wenige Minuten nach, bis das Diazoniumsalz verbraucht war. Aus dem Reaktionsgemisch wurde der Farbstoff der Formel

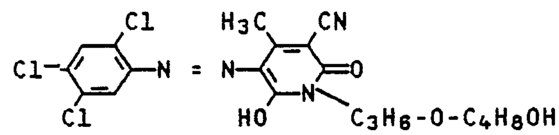

λmax. = 425 nm

abgesaugt, mit Wasser gewaschen und getrocknet. Er färbt Polyester nach dem HT-Verfahren mit sehr hohen Echtheiten.

Beispiel 3

19,65 g 2, 4, 5-Trichloranilin wurden gemäß Beispiel 2 diazotiert und filtriert. Die Diazoniumsalzlösung goß man auf ein Gemisch, das durch Austragen einer Lösung von 33,8 g 1-(4-Acetoxy-3-butoxypropyl)-2-hydroxy-3-cyano-4-methylpyrid-6-on in 300 ml Essigsäure auf 400 g Eis bereitet wurde. Kurz darauf war das Diazoniumsalz aufgebraucht. Man saugte ab, wusch mit Wasser neutral und trocknete bei 60°C.

Das erhaltene gelbe Pulver der Formel

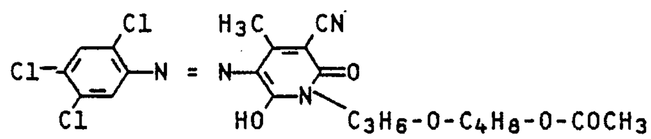

λmax. = 425 nm

färbt Polyester im gleichen Farbton und mit gleichen Echtheiten wie der Farbstoff des Beispiels 2 bei noch etwas besserem Badauszug und somit verbesserter Farbausbeute.

Der gleiche Farbstoff wird erhalten, wenn man den Farbstoff des Beispiels 2 in Essigsäure kocht und das reaktionswasser ausdestilliert. Isoliert wird durch Fällung mit Wasser und Absaugen.

Die in der folgenden Tabelle 1 aufgeführten Farbstoffe der Formel

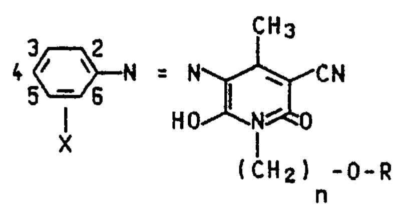

werden in analoger Weise erhalten werden. Ihre Färbe-und Echtheitseigenschaften sind denen der in den Beispieen 1 bis 3 beschriebenen Farbstoffe ähnlich.

Tabelle 1

| Beispiel Nr.: | X | R | n | λmax. nm |
|---|---|---|---|---|
| 4 | 2,3-$Cl_2$ | $(CH_2)_2$-O— 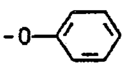 | 3 | 422 |
| 5 | 2,5-$Cl_2$ | $(CH_2)_2$-O— 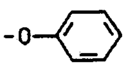 | 3 | 423 |
| 6 | 2,5-$Cl_2$ | $CH_2$— 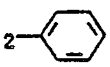 | 3 | 423 |
| 7 | 2,4,5-$Cl_3$ | $CH_2$— 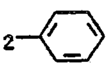 | 3 | 426 |
| 8 | 2,4,5-$Cl_3$ | $(CH_2)_2$-O— 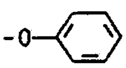 | 3 | 426 |
| 9 | 2,4,5-$Cl_3$ | $CH_2$— 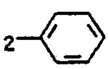 | 2 | 426 |
| 10 | 2,4,5-$Cl_3$ | $(CH_2)_2$-O— 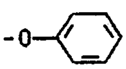 | 2 | 426 |
| 11 | 2,3-$Cl_2$ | $(CH_2)_2$—O— 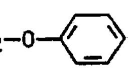 | 2 | 422 |

Tabelle 1 (Forts.)

| Beispiel Nr.: | X | R | n | λmax. nm |
|---|---|---|---|---|
| 12 | 2,5-$Cl_2$ | $(CH_2)_2$-O 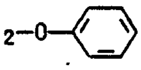 | 2 | 423 |
| 13 | 3,4-$Cl_2$ | $(CH_2)_2$-O 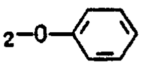 | 3 | 425 |
| 14 | 3,4-$Cl_2$ | $CH_2$ 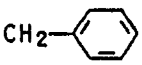 | 3 | 425 |
| 15 | 4-CN | $CH_2$ 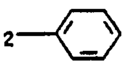 | 3 | 423 |
| 16 | 4-CN | $(CH_2)_2$-O 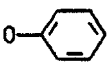 | 3 | 423 |
| 17 | 2,3-$Cl_2$ | $(CH_2)_2$-O-$(CH_2)_2$-O 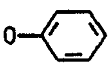 | 3 | 422 |
| 18 | 2,5-$Cl_2$ | $(CH_2)_2$-O-$(CH_2)_2$-O 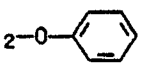 | 3 | 423 |
| 19 | 2,3-$Cl_2$ | $C_2H_4$ 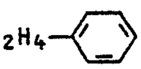 | 3 | 422 |
| 20 | 2,5-$Cl_2$ | $C_2H_4$ 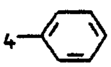 | 3 | 423 |
| 21 | 2,3-$Cl_2$ | $(CH_2)_2$-O-$(CH_2)_2$-O-$C_4H_9$ | 3 | 422 |
| 22 | 2,5-$Cl_2$ | $(CH_2)_2$-O-$(CH_2)_2$-O-$C_4H_9$ | 3 | 423 |
| 23 | 2,3-$Cl_2$ | $(CH_2)_2$-O-$(CH_2)_2$-O-$C_2H_5$ | 3 | 422 |
| 24 | 2,5-$Cl_2$ | $(CH_2)_2$-O-$(CH_2)_2$-O-$C_4H_9$ | 3 | 423 |
| 25 | 2,4,5-$Cl_3$ | $(CH_2)_2$-O-$(CH_2)_2$-O-$C_4H_9$ | 3 | 426 |
| 26 | 4-CN | $(CH_2)_2$O-$(CH_2)_2$-O 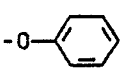 | 3 | 423 |
| 27 | 2,5-$Cl_2$ | $(CH_2)_4$-O-$COCH_3$ | 3 | 423 |
| 28 | 2,5-$Cl_2$ | $(CH_2)_4$-O-$COC_2H_5$ | 3 | 423 |
| 29 | 2,3-$Cl_2$ | $(CH_2)_4$-O-$COCH(CH_3)_2$ | 3 | 421 |
| 30 | 2,3-$Cl_2$ | $(CH_2)_4$-O-$COC_2H_5$ | 3 | 421 |
| 31 | 2,3-$Cl_2$ | $(CH_2)_4$-O-$COCH_3$ | 3 | 421 |
| 32 | 3,4-$Cl_2$ | $(CH_2)_4$-O-$COCH_3$ | 3 | 425 |

Tabelle 1 (Forts.)

| Beispiel Nr.: | X | R | n | λmax. nm |
|---|---|---|---|---|
| 33 | 2,4,5-$Cl_3$ | $(CH_2)_2$-O-$COC_2H_5$ | 2 | 425 |
| 34 | 2,4,5-$Cl_3$ | $(CH_2)_4$-O-COH | 3 | 425 |
| 35 | 2,3-$Cl_2$ | $(CH_2)_3$-O-$COC_2H_5$ | 3 | 421 |
| 36 | 2,5-$Cl_2$ | $(CH_2)_3$-O-$COC_2H_5$ | 3 | 423 |
| 37 | 4-CN | $(CH_2)_4$-O-$COC_2H_5$ | 3 | 423 |

Beispiel 38

Eine Lösung von 19,3 g 3-Aminobenzoesäureisobutylrester in 90 ml 10 %iger Salzsäure wurde mit Eis auf -5 bis -8°C abgekühlt. Dazu gab man rasch 31 ml einer wäßrigen, 23 %igen Natriumnitritlösung und rührte das Gemisch 1 Stunde bei 0/5°C. Dann zerstörte man überschüssige salpetrige Säure wie üblich und erhöhte den pH-Wert der Reaktionsmischung mit eiskalter ca. 15 - 20 %iger natronlauge auf 2,0 bis 2,5. Danach wurde die Diazoniumsalzlösung langsam auf ein Gemisch der Kupplunskomponente ausgetragen, das wie folgt bereitet wurde: 30, 4 g 1-(3-Benzyloxypropyl)-2-hydroxy-3-cyano-4-methylpyrid-6-on wurden mit 12 g Natriumhydrogencarbonat in 400 ml Wasser bei Raumtemperatur gelöst und filtriert. Das Filtrat wurde mit 100 g Eis gekühlt und mit 30 g Natriumhydrogencarbonat versetzt. Das Diazoniumsalz war unmittelbar nach der Vereinigung der Komponenten verbraucht. Der gebildete Farbstoff der Formel

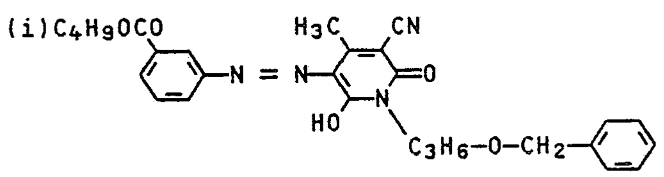

$\lambda_{max}$ : 422,5 nm (Aceton)

Fp.: 122 °C

wurde durch Absaugen, Waschen mit Wasser und Trocknung bei 80°C gewonnen.

Er färbt Polyester nach dem HT-Verfahren bereits bei 125°C in grünstichig gelben Tönen, wobei das wäßrige Färbeband vollständig ausgezogen wird. Die Färbungen besitzen sehr gute Licht-, Wasch-und Bügelechtheiten.

Beispiel 39

22,8 g 3-Amono-4-chlor-benzoesäureisobutylester wurden mit 150 ml Wasser, 0,5 g eines oxethylierten Oleylamins und 30 ml 30 %iger Salzsäure verrührt. Das Demisch kühlte man mit Eis auf -5°C ab und ließ dazu 31 ml einer 3,33 normalen Natriumnitritlösung einfließen. Nach zweistündigem Rühren bei ca. 15°C wurde überschüssige salpetrige Säure mit wenig Aminosulfonsäure zerstört. Zur Diazoniumsalzlösung ließ man dann die Lösung von 28,5 g 1-[3-(4-Hydroxybutoxy)propyl]-2-hydroxy-3-cyano-4-methylpyrid-6-on in 400 ml Wasser zufließen und rührte wenige Minuten nach, bis das Diazoniumsalz verbraucht war. Aus dem Reaktionsgemisch wurde der Farbstoff der Formel

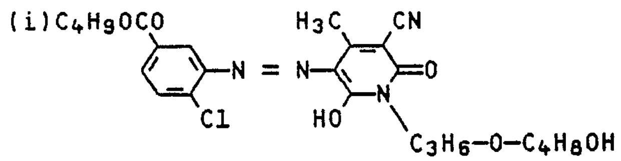

$\lambda_{max}$: 422 nm

abgesaugt, mit Wasser gewaschen und getrocknet. Er färbt Polyester nach dem HT-Verfahren mit sehr hohen Echtheiten.

Beispiel 40

22,8 g 3-Amino-4-chlorbenzoesäureisobutylester wurden gemäß Beispiel 39 diazotiert. Die Diazoniumsalzlösung goss man auf ein Gemisch, das durch Austragen einer Lösung von 33,8 g 1-[3-(4-Acetoxybutoxy)propyl]-2-hydroxy-3-cyano-4-methylpyrid-6-on in 300 ml Essigsäure auf 400 g Eis bereitet wurde. Kurz darauf war das Diazoniumsalz aufgebraucht. Man saugte ab, wusch mit Wasser neutral und trocknete bei 60°C. Das erhaltene gelbe Pulver der Formel

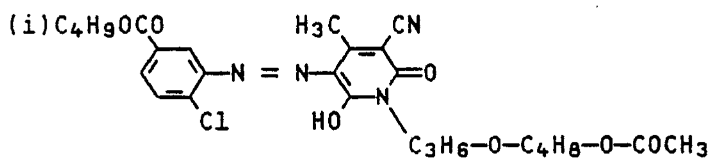

$\lambda_{max}$: 422 nm

färbt Polyester im gleichen Farbton und mit gleichen Echtheiten wie der Farbstoff des Beispiels 39 bei noch etwas besserem Badauszug und somit verbesserter Farbausbeute.

Der gleiche Farbstoff wurde erhalten, als man den Farbstoff des Beispiels 39 in Essigsäure kochte und das Reaktionswasser ausdestilierte. Isoliert wurde durch Fällung mit Wasser und Absaugen.

Beispiel 41

Eine Lösung von 19,3 g 3-Aminobenzoesäureisobutylester in 90 ml 10 %iger Salzsäure wurde mit Eis auf -5 bis -8°C abgekühlt. Dann gab man rasch 31 ml einer wäßrigen, 23 %igen Natriumnitritlösung hinzu und rührte das Gemisch 1 Stunde bei 0 bis 5°C. Dann zerstörte man überschüssige salpetrige Säure wie üblich und erhöhte den pH-Wert der Reaktionsmischung durch Zugabe eiskalter, ca. 15 - 20 %iger Natronlauge auf 2,5 - 3,5.

Danach ließ man unter sehr guter Rührung eine Lösung von 29 g 1-(3-Cyclo-hexyloxypropyl)-2-hydroxy-3-cyano-4-methyl-pyrid-6-on in 460 ml Wasser und 9 g 50 %iger Natronlauge zulaufen. Anschließend stellte man den pH-Wert der Reaktionsmischung mit Natronlauge auf 5 bis 7,5, erhitzte die Farbstoffsuspension mit Dampfdruck auf 80-95°C, temperte und isolierte wie üblich. Man erhielt 49,3 g eines gelben Pulvers das bei 167°C schmilzt und sich in Aceton gelb löst.

$\lambda_{max}$: 422,5 nm, Schmp.: 167°C.

In analoger Weise werden die in den nachfolgenden Tabellen 2 und 3 aufgeführten Farbstoffe erhalten.

Tabelle 2

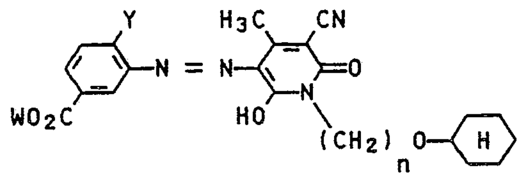

| Bsp. Nr. | W | Y | n | λmax [nm] in Aceton | Farbton auf Polyester |
|---|---|---|---|---|---|
| 42 | $C_2H_5$ | Cl | 2 | 422 | grünstichiges Gelb |
| 43 | $C_2H_5$ | Cl | 3 | 422,5 | grünstichiges Gelb |
| 44 | $C_2H_5$ | H | 3 | 422,2 | grünstichiges Gelb |
| 45 | $CH_3$ | H | 3 | 422,2 | grünstichiges Gelb |
| 46 | $CH_3$ | Cl | 3 | 422 | grünstichiges Gelb |
| 47 | $C_3H_7$(n) | Cl | 3 | 422 | grünstichiges Gelb |
| 48 | $C_3H_7$(n) | H | 3 | 422,5 | grünstichiges Gelb |
| 49 | $C_4H_9$(n) | H | 3 | 422,5 | grünstichiges Gelb |
| 50 | $C_4H_9$(n) | Cl | 3 | 422 | grünstichiges Gelb |
| 51 | $C_4H_9$(i) | Cl | 3 | 422 | grünstichiges Gelb |
| 52 | $C_4H_9$(n) | Cl | 3 | 422 | grünstichiges Gelb |
| 53 | $C_4H_9$(n) | H | 3 | 422,5 | grünstichiges Gelb |
| 54 | $C_4H_9$(i) | H | 2 | 422 | grünstichiges Gelb |
| 55 | $C5H_{11}$(n) | H | 3 | 422,5 | grünstichiges Gelb |
| 56 | $C_3H_6CH(CH_3)CH_2$ | H | 3 | 422,5 | grünstichiges Gelb |
| 57 | $(CH_3)_2CH(CH_2)_2$ | H | 3 | 422,5 | grünstichiges Gelb |
| 58 | $CH_3CH(OCH_3)CH_2$ | H | 3 | 422,5 | grünstichiges Gelb |
| 59 | $CH_3OCH_2CH(CH_3)$ | H | 3 | 422,5 | grünstichiges Gelb |

Tabelle 3

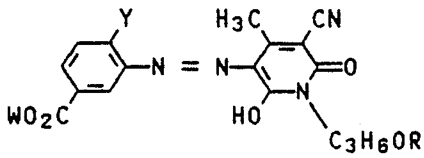

| Bsp. Nr. | W | Y | R | λmax [nm] in Aceton | Farbton auf Polyester |
|---|---|---|---|---|---|
| 60 | $CH_3$ | H | $CH_2C_6H_5$ | 422,7 | grünstichig gelb |
| 61 | $CH_3$ | Cl | $CH_2C_6H_5$ | 422 | grünstichig gelb |
| 62 | $CH_3$ | H | $CH_2CH_2C_6H_5$ | 423 | grünstichig gelb |
| 63 | $CH_3$ | H | $CH_2CH_2OC_6H_5$ | 423 | grünstichig gelb |
| 64 | $CH_3$ | H | 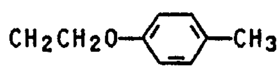 | 423 | grünstichig gelb |
| 65 | $C_2H_5$ | H | $CH_2C_6H_5$ | 422,5 | grünstichig gelb |
| 66 | $(CH_3)_2C_2H_4$ | H | $CH_2C_6H_5$ | 422,5 | grünstichig gelb |
| 67 | $C_2H_5$ | Cl | $CH_2C_6H_5$ | 422,2 | grünstichig gelb |
| 68 | $C_2H_5$ | H | $CH_2CH_2OC_6H_5$ | 423 | grünstichig gelb |
| 69 | $C_3H_7(n)$ | H | $CH_2CH_2OC_6H_5$ | 423 | grünstichig gelb |
| 70 | $C_3H_7(n)$ | H | $CH_2C_6H_5$ | 422,5 | grünstichig gelb |
| 71 | $C_3H_7(n)$ | Cl | $CH_2C_6H_5$ | 422 | grünstichig gelb |
| 72 | $C_3H_7(n)$ | Cl | $CH_2CH_2OC_6H_5$ | 422,5 | grünstichig gelb |
| 73 | $C_3H_7(i)$ | Cl | $CH_2CH_2OC_6H_5$ | 422,5 | grünstichig gelb |
| 74 | $C_3H_7(i)$ | H | $CH_2CH_2OC_6H_5$ | 423 | grünstichig gelb |
| 75 | $C_3H_7(i)$ | H | $CH_2C_6H_5$ | 422 | grünstichig gelb |
| 76 | $C_4H_9(n)$ | H | $CH_2C_6H_5$ | 422 | grünstichig gelb |
| 77 | $C_4H_9(n)$ | H | $CH_2CH_2OC_6H_5$ | 423 | grünstichig gelb |
| 78 | $CH_3$ | H | $CHCH_2OC_6H_5$<br>$\vert$<br>$CH_3$ | 423 | grünstichig gelb |

Tabelle 3 (Forts.)

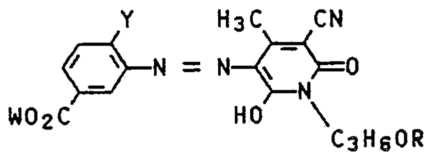

| Bsp. Nr. | W | Y | R | λmax [nm] in Aceton | Farbton auf Polyester |
|---|---|---|---|---|---|
| 79 | $C_4H_9(i)$ | H | $(CH_2)_2C_6H_5$ | 422 | grünstichig gelb |
| 80 | $C_5H_{11}(n)$ | H | $CH_2C_6H_5$ | 422 | grünstichig gelb |
| 81 | $C_5H_{11}(n)$ | Cl | $CH_2C_6H_5$ | 422 | grünstichig gelb |
| 82 | $C_5H_{11}(n)$ | H | $CH_2CH_2OC_6H_5$ | 423 | grünstichig gelb |
| 83 | $(CH_3)_2CH(CH_2)_2$ | H | $CH_2CH_2OC_6H_5$ | 423 | grünstichig gelb |
| 84 | $CH_3CHCH_2$<br>$OCH_3$ | H | $CH_2CH_2OC_6H_5$ | 423 | grünstichig gelb |
| 85 | $CH_3CHCH_2$<br>$OCH_3$ | Cl | $CH_2CH_2OC_6H_5$ | 422,5 | grünstichig gelb |
| 86 | $CH_3CHCH_2$<br>$OCH_3$ | H | $CH_2C_6H_5$ | 422 | grünstichig gelb |
| 87 | $CH_3OCH_2CH$<br>$CH_3$ | H | $CH_2C_6H_5$ | 422 | grünstichig gelb |
| 88 | $CH_3OCH_2CH$<br>$CH_3$ | H | $C_4H_8OCOCH_3$ | 422 | grünstichig gelb |
| 89 | $C_4H_9(i)$ | H | $C_4H_8OCOCH_3$ | 422 | grünstichig gelb |
| 90 | $C_4H_9(n)$ | H | $C_4H_8OCOCH_3$ | 422 | grünstichig gelb |
| 91 | $C_6H_{13}$ | H | $C_4H_8OH$ | 422 | grünstichig gelb |
| 92 | $C_4H_9(i)$ | H | $(C_2H_4O)_2C_6H_5$ | 423 | grünstichig gelb |
| 93 | $C_4H_9(i)$ | H | $(C_2H_4O)_2C_4H_9$ | 422 | grünstichig gelb |
| 94 | $CH_3$ | H | $C_2H_4C_6H_5$ | 423 | grünstichig gelb |

Die in der folgenden Tabelle 4 aufgeführten Farbstoffe der Formel

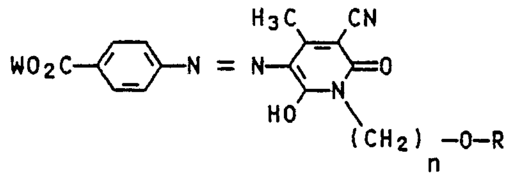

werden in analoger Weise erhalten. Ihre Färbe-und Echtheitseigenschaften sind denen der in den Beispielen 38 bis 41 beschriebenen Farbstoffe ähnlich.

Tabelle 4

| Bsp. Nr. | W | R | n | λmax [nm] in Aceton | Farbton auf Polyester |
|---|---|---|---|---|---|
| 95 | $CH_3$ | 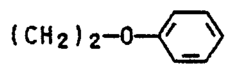 | 3 | 427 | gelb |
| 96 | $C_4H_9$(i) | 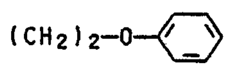 | 3 | 427 | gelb |
| 97 | $C_4H_9$(i) | 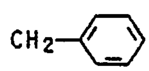 | 3 | 427 | gelb |
| 98 | $CH_3$ | 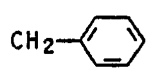 | 3 | 427 | gelb |
| 99 | $CH_3OC_2H_4$ | 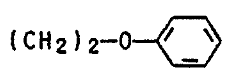 | 3 | 427 | gelb |
| 100 | $CH_3OC_2H_4$ | 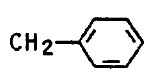 | 2 | 427 | gelb |
| 101 | $C_2H_5OC_2H_4$ | 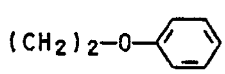 | 2 | 427 | gelb |
| 102 | $C_2H_5$ | 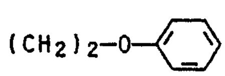 | 2 | 427 | gelb |
| 103 | $C_3H_7$(n) | 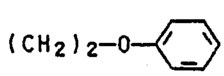 | 3 | 432 | rotstichig gelb |
| 104 | $C_3H_7$(i) | 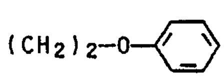 | 3 | 427 | gelb |
| 105 | $C_2H_5$ | 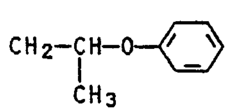 | 3 | 427 | gelb |

Die in der folgenden Tabelle 5 aufgeführten Farbstoffe der Formel

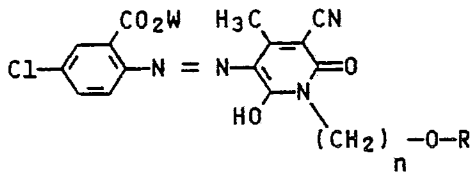

werden in analoger Weise erhalten. Ihre Färbe-und Echtheitseigenschaften sind denen der in den Beispielen 38 bis 41 beschriebenen Farbstoffe ähnlich.

Tabelle 5

| Bsp. Nr. | W | R | n | λmax [nm] in Aceton | Farbton auf Polyester |
|---|---|---|---|---|---|
| 106 | $CH_3$ | $(CH_2)_2$–O– 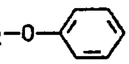 | 3 | 427 | gelb |
| 107 | $C_4H_9(i)$ | $(CH_2)_2$–O– 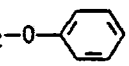 | 3 | 427 | gelb |
| 108 | $CH_3$ | $CH_2$– 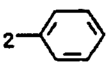 | 3 | 426 | gelb |
| 109 | $C_4H_9(i)$ | $CH_2$– 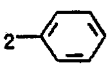 | 3 | 426 | gelb |
| 110 | $CH_3OC_2H_4$ | $(CH_2)_2$–O– 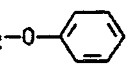 | 3 | 427 | gelb |
| 111 | $CH_3OC_2H_4$ | $CH_2$– 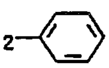 | 2 | 426 | gelb |
| 112 | $C_2H_5$ | $(CH_2)_2$–O– 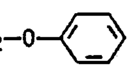 | 2 | 427 | gelb |
| 113 | $C_2H_5$ | $CHCH_2$–O– 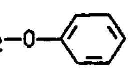<br>$CH_3$ | 3 | 427 | gelb |
| 114 | $C_3H_7(i)$ | $(CH_2)_2$–O– 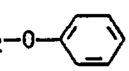 | 2 | 427 | gelb |
| 115 | $C_4H_9(n)$ | $(CH_2)_2$–O– 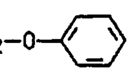 | 3 | 427 | gelb |
| 116 | $CH_3OCH_2CH$<br>$OCH_3$ | $CH_2$– 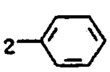 | 3 | 426 | gelb |
| 117 | $CH_3$ | 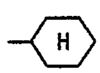 | 3 | 426 | gelb |
| 118 | $C_4H_9(i)$ | 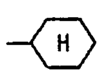 | 3 | 426 | gelb |
| 119 | $CH_3OC_2H_4$ | 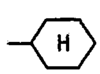 | 3 | 426 | gelb |

Die in der folgenden Tabelle 6 aufgeführten Farbstoffe der Formel

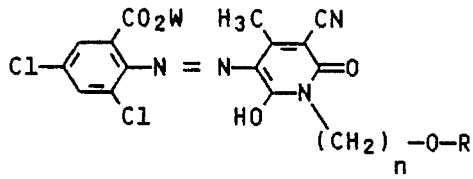

werden in analoger Weise erhalten. Ihre Färbe-und Echtheitseigenschaften sind denen der in den Beispielen 38 bis 41 beschriebenen Farbstoffe ähnlich.

Tabelle 5

| Bsp. Nr. | W | R | n | λmax [nm] in Aceton | Farbton auf Polyester |
|---|---|---|---|---|---|
| 120 | $CH_3$ | $(CH_2)_2-O-$ 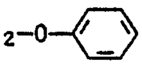 | 3 | 413 | stark grünstichiges gelb |
| 121 | $CH_3OC_2H_4$ | $(CH_2)_2-O-$ 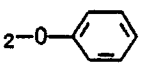 | 3 | 413 | stark grünstichiges gelb |
| 122 | $CH_3OC_2H_4$ | $CH_2-$ 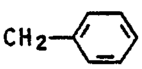 | 3 | 413 | stark grünstichiges gelb |
| 123 | $CH_3OCH_2CH(CH_3)$ | $CH_2-$ 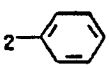 | 3 | 413 | stark grünstichiges gelb |
| 124 | $CH_3OCH_2CH(CH_3)$ | $(CH_2)_2-O-$ 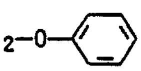 | 3 | 413 | stark grünstichiges gelb |
| 125 | $C_2H_5$ | $CH_2-$ 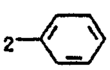 | 2 | 413 | stark grünstichiges gelb |
| 126 | $C_2H_5OC_2H_4$ | $(CH_2)_2-O-$ 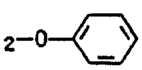 | 2 | 413 | stark grünstichiges gelb |
| 127 | $CH_3$ | 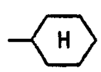 | 3 | 413 | stark grünstichiges gelb |
| 128 | $CH_3OC_2H_4$ | 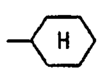 | 3 | 413 | stark grünstichiges gelb |
| 129 | $CH_3$ | $C_2H_4OC_2H_4OC_4H_9$ | 3 | 413 | stark grünstichiges gelb |
| 130 | $CH_3$ | $C_2H_4OC_2H_4OC_2H_5$ | 3 | 413 | stark grünstichiges gelb |
| 131 | $CH_3$ | $C_4H_8OCOCH_3$ | 3 | 413 | stark grünstichiges gelb |

Die in den folgenden Tabellen 7 bis 10 aufgeführten Farbstoffe werden in analoger Weise erhalten. Ihre Färbe-und Echtheitseigenschaften sind denen der in den Beispielen 38 bis 41 beschriebenen Farbstoffe

ähnlich. Die Farbstoffe der Tabellen 8 bis 10 sind insbesondere für den Ätzdruck geeignet.

Tabelle 7

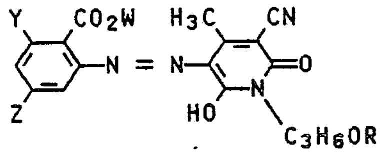

| Bsp. Nr. | W | Y | Z | R | λmax [nm] in Aceton | Farbton auf Polyester |
|---|---|---|---|---|---|---|
| 132 | $CH_3$ | Cl | H | $CH_2C_6H_5$ | 423 | grünstichig gelb |
| 133 | $CH_3$ | Cl | H | $C_2H_4OC_6H_5$ | 423 | grünstichig gelb |
| 134 | $CH_3$ | Cl | H | 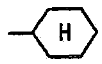 | 423 | grünstichig gelb |
| 135 | $C_4H_9(i)$ | Cl | H | 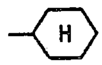 | 423 | grünstichig gelb |
| 136 | $C_4H_9(i)$ | Cl | H | $CH_2C_6H_5$ | 423 | grünstichig gelb |
| 137 | $C_4H_9(i)$ | Cl | H | $C_2H_4OC_6H_5$ | 423 | grünstichig gelb |
| 138 | $CH_3OCH_2CH$<br>$CH_3$ | Cl | H | $C_2H_4OC_6H_5$ | 423 | grünstichig gelb |
| 139 | $CH_3OCH_2CH$<br>$CH_3$ | Cl | H | $CH_2C_6H_5$ | 423 | grünstichig gelb |
| 140 | $CH_3OCH_2CH$<br>$CH_3$ | H | Cl | $CH_2C_6H_5$ | 421 | grünstichig gelb |
| 141 | $CH_3$ | H | Cl | $CH_2C_6H_5$ | 421 | grünstichig gelb |
| 142 | $CH_3$ | H | Cl | $CH_2CH_2OC_6H_5$ | 421 | grünstichig gelb |
| 143 | $CH_3$ | H | Cl | 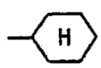 | 421 | grünstichig gelb |
| 144 | $C_4H_9(i)$ | H | Cl | 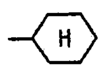 | 421 | grünstichig gelb |
| 145 | $C_4H_9(i)$ | H | Cl | $CH_2C_6H_5$ | 421 | grünstichig gelb |
| 146 | $C_4H_9(i)$ | H | Cl | $C_2H_4OC_6H_5$ | 421 | grünstichig gelb |
| 147 | $CH_3OCH_2CH$<br>$CH_3$ | H | Cl | $C_2H_4OC_6H_5$ | 421 | grünstichig gelb |
| 148 | $CH_3OCH_2CH$<br>$CH_3$ | H | Cl | $CH_2C_6H_5$ | 421 | grünstichig gelb |

Tabelle 8

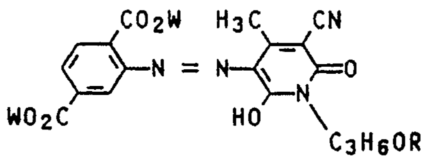

| Bsp. Nr. | W | R | λmax [nm] in Aceton | Farbton auf Polyester |
|---|---|---|---|---|
| 149 | $CH_3$ | $CH_2C_6H_5$ | 422 | grünstichig gelb |
| 150 | $CH_3$ | $CH_2C_6H_5$ | 422 | grünstichig gelb |
| 151 | $CH_3$ | $CH_2CH_2C_6H_5$ | 422 | grünstichig gelb |
| 152 | $CH_3$ | $CH_2CH_2OC_6H_5$ | 423 | grünstichig gelb |
| 153 | $CH_3$ | $CH_2CH_2O$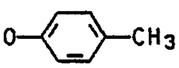 | 423 | grünstichig gelb |
| 154 | $C_2H_5$ | $CH_2C_6H_5$ | 422 | grünstichig gelb |
| 155 | $(CH_3)_2C_2H_4$ | $CH_2C_6H_5$ | 422 | grünstichig gelb |
| 156 | $C_2H_5$ | $CH_2C_6H_5$ | 422 | grünstichig gelb |
| 157 | $C_2H_5$ | $CH_2CH_2OC_6H_5$ | 423 | grünstichig gelb |
| 158 | $C_3H_7(n)$ | $CH_2CH_2OC_6H_5$ | 423 | grünstichig gelb |
| 159 | $C_3H_7(n)$ | $CH_2C_6H_5$ | 422 | grünstichig gelb |
| 160 | $C_3H_7(n)$ | $CH_2C_6H_5$ | 422 | grünstichig gelb |
| 161 | $C_3H_7(n)$ | $CH_2CH_2OC_6H_5$ | 423 | grünstichig gelb |
| 162 | $C_3H_7(i)$ | $CH_2CH_2OC_6H_5$ | 423 | grünstichig gelb |
| 163 | $C_3H_7(i)$ | $CH_2CH_2OC_6H_5$ | 423 | grünstichig gelb |
| 164 | $C_3H_7(i)$ | $CH_2C_6H_5$ | 422 | grünstichig gelb |
| 165 | $C_4H_9(n)$ | $CH_2C_6H_5$ | 422 | grünstichig gelb |
| 166 | $C_4H_9(n)$ | $CH_2CH_2OC_6H_5$ | 423 | grünstichig gelb |
| 167 | $C_4H_9(i)$ | $CH_2CH_2OC_6H_5$ | 423 | grünstichig gelb |

Tabelle 8 (Forts.)

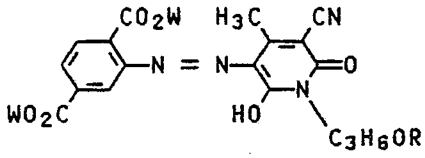

| Bsp. Nr. | W | R | λmax [nm] in Aceton | Farbton auf Polyester |
|---|---|---|---|---|
| 168 | $C_4H_9(i)$ | $(CH_2)_2C_6H_5$ | 422 | grünstichig gelb |
| 169 | $C_5H_{11}(n)$ | $CH_2C_6H_5$ | 422 | grünstichig gelb |
| 170 | $C_5H_{11}(n)$ | $CH_2C_6H_5$ | 422 | grünstichig gelb |
| 171 | $C_5H_{11}(n)$ | $CH_2CH_2OC_6H_5$ | 423 | grünstichig gelb |
| 172 | $(CH_3)_2CH(CH_2)_2$ | $CH_2CH_2OC_6H_5$ | 423 | grünstichig gelb |
| 173 | $CH_3CHCH_2$<br>$OCH_3$ | $CH_2CH_2OC_6H_5$ | 423 | grünstichig gelb |
| 174 | $CH_3CHCH_2$<br>$OCH_3$ | $CH_2CH_2OC_6H_5$ | 422,5 | grünstichig gelb |
| 175 | $CH_3CHCH_2$<br>$OCH_3$ | $CH_2C_6H_5$ | 422 | grünstichig gelb |
| 176 | $CH_3OCH_2CH$<br>$CH_3$ | $CH_2C_6H_5$ | 422 | grünstichig gelb |
| 177 | $CH_3OCH_2CH$<br>$CH_3$ | $C_4H_8OCOCH_3$ | 422 | grünstichig gelb |
| 178 | $C_4H_9(i)$ | $C_4H_8OCOCH_3$ | 422 | grünstichig gelb |
| 179 | $C_4H_9(n)$ | $C_4H_8OCOCH_3$ | 422 | grünstichig gelb |
| 180 | $C_6H_{13}$ | $C_4H_8OH$ | 423 | grünstichig gelb |
| 181 | $C_4H_9(i)$ | $(C_2H_4O)_2C_6H_5$ | 423 | grünstichig gelb |
| 182 | $C_4H_9(i)$ | $(C_2H_4O)_2C_4H_9$ | 422 | grünstichig gelb |
| 183 | $CH_3$ | $C_2H_4C_6H_5$ | 423 | grünstichig gelb |

Tabelle 9

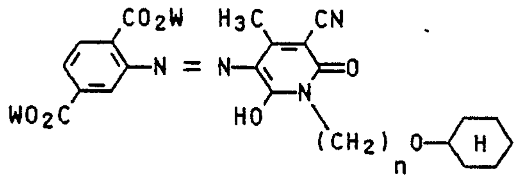

| Bsp. Nr. | W | n | λmax [nm] in Aceton | Farbton auf Polyester |
|---|---|---|---|---|
| 184 | $C_2H_5$ | 2 | 422 | grünstichiges Gelb |
| 185 | $C_2H_5$ | 3 | 423 | grünstichiges Gelb |
| 186 | $C_2H_5$ | 3 | 423 | grünstichiges Gelb |
| 187 | $CH_3$ | 3 | 423 | grünstichiges Gelb |
| 188 | $CH_3$ | 3 | 423 | grünstichiges Gelb |
| 189 | $C_3H_7(n)$ | 3 | 423 | grünstichiges Gelb |
| 190 | $C_3H_7(n)$ | 3 | 423 | grünstichiges Gelb |
| 191 | $C_4H_9(n)$ | 3 | 423 | grünstichiges Gelb |
| 192 | $C_4H_9(n)$ | 3 | 423 | grünstichiges Gelb |
| 193 | $C_4H_9(i)$ | 3 | 423 | grünstichiges Gelb |
| 194 | $C_4H_9(n)$ | 3 | 423 | grünstichiges Gelb |
| 195 | $C_4H_9(n)$ | 3 | 423 | grünstichiges Gelb |
| 196 | $C_4H_9(i)$ | 2 | 422 | grünstichiges Gelb |
| 197 | $C_5H_{11}(n)$ | 3 | 423 | grünstichiges Gelb |
| 198 | $C_3H_6CH(CH_3)CH_2$ | 3 | 423 | grünstichiges Gelb |
| 199 | $(CH_3)_2CH(CH_2)_2$ | 3 | 423 | grünstichiges Gelb |
| 200 | $CH_3CH(OCH_3)CH_2$ | 3 | 423 | grünstichiges Gelb |
| 201 | $CH_3OCH_2CH(CH_3)$ | 3 | 423 | grünstichiges Gelb |

Tabelle 10

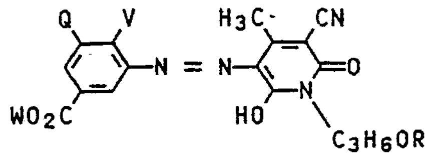

| Bsp. Nr. | V | Q | W | R | λmax [nm] in Aceton | Farbton auf Polyester |
|---|---|---|---|---|---|---|
| 202 | $CO_2CH_3$ | H | $C_3H_7(i)$ | $CH_2C_6H_5$ | 422 | grünstichiges gelb |
| 203 | $CO_2CH_3$ | H | $C_4H_9(n)$ | $CH_2C_6H_5$ | 422 | grünstichiges gelb |
| 204 | $CO_2CH_3$ | H | $C_4H_9(n)$ | $C_2H_4OC_6H_5$ | 422 | grünstichiges gelb |
| 205 | $CO_2CH_3$ | H | $C_4H_9(n)$ | 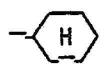 | 422 | grünstichiges gelb |
| 206 | $CO_2CH_3$ | H | $C_4H_9(i)$ | 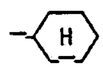 | 422 | grünstichiges gelb |
| 207 | $CO_2CH_3$ | H | $C_4H_9(i)$ | $CH_2C_6H_5$ | 422 | grünstichiges gelb |
| 208 | $CO_2CH_3$ | H | $C_4H_9(i)$ | $C_2H_4OC_6H_5$ | 423 | grünstichiges gelb |
| 209 | $CO_2CH_3$ | H | $C_4H_9(i)$ | $C_4H_8OCOCH_3$ | 423 | grünstichiges gelb |
| 210 | $CO_2CH_3$ | H | $C_2H_4OC_2H_5$ | $CH_2C_6H_5$ | 422 | grünstichiges gelb |
| 211 | $CO_2CH_3$ | H | $C_2H_4OC_4H_9$ | $CH_2C_6H_5$ | 422 | grünstichiges gelb |
| 212 | $CO_2CH_3$ | H | $C_2H_4OC_4H_9$ | $C_2H_4OC_6H_5$ | 423 | grünstichiges gelb |
| 213 | H | $CO_2C_3H_7(i)$ | $C_3H_7(i)$ | $C_2H_4OC_6H_5$ | 419 | stark grünstichig gelb |
| 214 | H | $CO_2C_3H_7(i)$ | $C_3H_7(i)$ | $CH_2C_6H_5$ | 420 | stark grünstichig gelb |
| 215 | H | $CO_2C_3H_7(i)$ | $C_3H_7(i)$ | $C_4H_8OCOCH_3$ | 420 | stark grünstichig gelb |
| 216 | H | $CO_2C_3H_7(i)$ | $C_3H_7(i)$ | 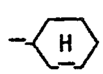 | 419 | stark grünstichig gelb |
| 217 | $CO_2CH_3$ | H | $C_6H_{13}(n)$ | $C_2H_4OC_6H_5$ | 422 | grünstichiges gelb |

## Ansprüche

1. Pyridonazofarbstoffe der Formel I

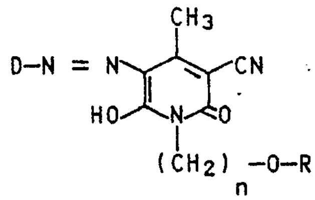

(I),

in der
n für die Zahl 2 oder 3,
D für 2,3-Dichlorphenyl, 3,4-Dichlorphenyl, 2,5-Dichlorphenyl, 2,4,5-Trichlorphenyl, 4-Cyanophenyl oder einen Rest der Formel

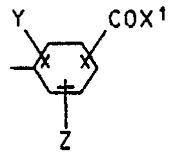

,

in der $X^1$ $C_1$-$C_4$-Alkyl oder $C_1$-$C_{10}$-Alkoxy, das gegebenenfalls durch ein oder mehrere Sauerstoffatome unterbrochen ist, Y Wasserstoff, Chlor oder den Rest $COX^2$, in dem $X^2$ die Bedeutung von $C_1$-$C_{10}$-Alkoxy, das gegebenenfalls durch ein oder mehrere Sauerstoffatome unterbrochen ist, besitzt und Z Wasserstoff oder Chlor bedeuten und
für einen Rest der Formel

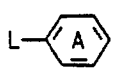 , 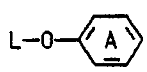 , 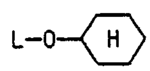 ,

$[L\text{-}O]_2$-T, L-OH oder L-O-$COR^1$, wobei L gegebenenfalls verzweigtes $C_1$-$C_4$-Alkylen, T $C_1$-$C_4$-Alkyl oder

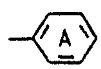

und $R^1$ Wasserstoff oder $C_1$-$C_7$-Alkyl bedeuten und der Ring A jeweils durch Methyl oder Chlor substituiert sein kann, oder für den Fall, daß D den Rest

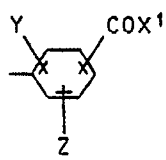

,

bedeutet, auch für Cyclohexyl stehen,
mit der Maßgabe, daß wenn D den Rest

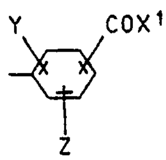

,

bedeutet und wenn dabei Y und Z gleichzeitig Wasserstoff bedeuten, der Rest $COX^1$ nicht in ortho-Position

zur Azobrücke steht.

2. Pyridonazofarbstoffe gemäß Anspruch 1, dadurch gekennzeichnet, daß
n für die Zahl 3,
D für einen Rest der Formel

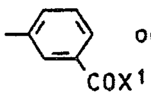 oder 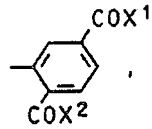 ,

wobei $X^1$ und $X^2$ gleich oder verschieden sind und unabhängig voneinander jeweils $C_1$-$C_4$-Alkoxy, das gegebenenfalls durch ein Sauerstoffatom unterbrochen ist, bedeuten und
für einen Rest der Formel

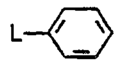 , 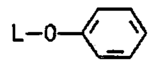 ,

$[(CH_2)\text{-}O]_2T$, $[(CH_2)_3\text{-}O]_2\text{-}T$ oder L-O-COR[1] stehen, wobei L Methylen, Ethylen oder Tetramethylen, T $C_1$-$C_4$-Alkyl oder Phenyl und $R^1$ Methyl oder Ethyl bedeuten.

3. Pyridonazofarbstoffe gemäß Anspruch 1, dadurch gekennzeichnet, daß
n für die Zahl 3,
D für 2,3-Dichlorphenyl oder 2,5-Dichlorphenyl und
R für einen Rest der Formel

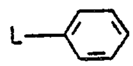 , 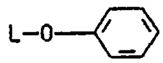 ,

$[(CH_2)_2\text{-}0]_2\text{-}T$, $[(CH_2)_3\text{-}0]_2\text{-}T$ oder L-O-COR[1] stehen, wobei L Methylen, Ethylen oder Tetramethylen, T $C_1$-$C_4$-Alkyl oder Phenyl und $R^1$ Methyl oder Ethyl bedeuten.

Europäisches Patentamt

# EUROPÄISCHER RECHERCHENBERICHT

Nummer der Anmeldung

EP 87 11 6296

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 061 667 (BASF)<br>* Anspruch 1; Seite 15, Beispiele 28,30 * | 1 | C 09 B 29/42<br>D 06 P 1/18 |
| D,A | DE-A-2 951 403 (BASF)<br>* Anspruch 1 * | 1 | |
| A | CH-A- 644 621 (CIBA-GEIGY)<br>* Anspruch 1 * | 1 | |
| A | FR-A-2 024 762 (SANDOZ)<br>* Anspruch 1; Beispiele 68,72,105 * | 1 | |
| A | FR-A-2 038 227 (BASF)<br>* Anspruch 1; Beispiele 28,29,81 * | 1 | |

RECHERCHIERTE SACHGEBIETE (Int. Cl.4)

C 09 B

Der vorliegende Recherchenbericht wurde für alle Patentansprüche erstellt

| Recherchenort | Abschlußdatum der Recherche | Prüfer |
|---|---|---|
| DEN HAAG | 24-03-1988 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

BASF Aktiengesellschaft

BASF

BASF Aktiengesellschaft · D-6700 Ludwigshafen

EPA EPO-OEB
DG 1
Reçu:
15 -03- 1988
01

50150

EPA-EPO-OEB
MÜNCHEN
Empfang bestätigt
Receipt acknowledged
Accuse reception
SD

4. März 1988

Europäisches Patentamt
Erhardtstraße 27

D-8000 München 2

BRD

Patentabteilung-C6
ZSP/D - gg5252
Dr. Karg
Tel. 0621/60 43895
Telex 17 62 157 170
Ttx 62 157 170=BASF
Tfx 0621/60 43123

EP-Anmeldung Nr. 87116296.2 - O.Z. 0050/38783
Pyridonazofarbstoffe

Wie wir leider erst jetzt feststellten, befindet sich auf den Seiten 12 und 18 der obengenannten Anmeldung jeweils ein Fehler.

In den Beispielen Nr. 66 und 155 sollte der Rest W jeweils "$(CH_3)_2CHC_2H_4$" lauten.

Wir bitten diese Fehler zu entschuldigen und fügen als Anlage die entsprechend korrigierten Seiten 12 und 18 bei.

BASF Aktiengesellschaft

i. A. Karg

i. A. Karg
AV.-Nr. 3224

Anlage 3fach

Nur Zum Zwecke der Veröffentlichung

Datum: 17/3/88

Eingangsstelle